# EUROPEAN PATENT SPECIFICATION

(11) **EP 4 275 950 B1**
(45) Date of publication and mention of the grant of the patent: **26.11.2025**
(21) Application number: 22172643.3
(22) Date of filing: 10.05.2022
(51) Int. Cl.: B60N 2/28

(54) **CHILD RESTRAINT SYSTEM**
KINDERRÜCKHALTESYSTEM
SYSTÈME DE RETENUE D'ENFANT

(43) Date of publication of application: 15.11.2023
(73) Proprietor: Thule Sweden AB, 335 04 Hillerstorp (SE)
(72) Inventor: DE HAAS, Fortunatus Johannes, 4151 CP Acqoy (NL); SÖDERBERG, Rickard, 553 33 Jönköping (SE); KELEKIDIS, Andreas, 384 71 Timmernabben (SE); SMALS, Cyril, 5662HK Geldrop (NL); MEDIN, Mårten, 335 72 Hestra (SE); RÖSTEDAL, David, 554 49 Jönköping (SE); HALL, Tim, 553 37 Jönköping (SE); ÅHMAN, Daniel, 227 38 Lund (SE); RYDHOLM, Tobias, 560 30 Tenhult (SE); TEN HORN, Vincent, 2015HD Haarlem (NL)
(74) Representative: Wallentin, Lars

(56) References cited:
- EP-A1- 3 257 704
- CN-A- 112 060 993
- US-A1- 2021 237 626

## Description

### FIELD

The present disclosure relates to child restraint systems, in particular to a base mountable on a vehicle seat and configured to support a child seat thereon, as well as to a child seat releasably couplable to the base.

### BACKGROUND

Child restraint systems comprising a base which is fixedly mountable on a vehicle seat are known in the art. Known bases are fixedly installed on the vehicle seat and provide enhanced support to child seats compared to directly mounting the child seat on the vehicle seat. US 2021/0237626 A1 discloses a child safety seat having a base including a rotating mechanism and a seat shell for a child that is detachably connectable to the base when positioned exactly in a side facing orientation. The base comprises a recessed circular first interface portion with a base channel that is formed between retainers projecting inwardly from a lateral bearing surface and a floor surface. The seat shell comprises a second interface portion sized to be nested within the first interface portion and configured to be engaged with the base channel.

### SUMMARY

The present disclosure relates to improvements of child restraint systems of the above type. In particular, the present disclosure relates to improvements of a base for releasably supporting a child seat, and to improvements of a child seat releasably mountable on the base.

It is an object to provide an enhanced base and to provide an enhanced child seat releasably mountable on the base.

The object is solved by the configurations as presented in the independent claims, as well as in the aspects and example configurations as described herein. Advantageous further formations may be gleaned from the dependent claims and from the description.

In some embodiments, a base for a child restraint system is provided. In some embodiments, the base may comprise a primary support portion. The primary support portion may protrude from an upper surface portion of the base in a first direction. The primary support portion may be configured to be releasably engaged by an engaging portion of an inserted child seat in a positive locking manner for blocking a movement of the child seat in the first direction. The primary support portion may be configured to support the child seat rotatable about a rotation axis extending parallel to the first direction. In some embodiments, a lateral outer surface of the primary support portion is configured for receiving the engaging portion of the child seat for establishing the positive locking. In some embodiments, the primary support portion comprises a circumferential recess configured for receiving the engaging portion of the child seat thereby allowing to couple the child seat to the primary support portion in multiple arbitrary angular position orientations about the rotation axis.

In some embodiments, the primary support portion is configured to bear the main weight of a mounted child seat. In addition or alternatively, the primary support portion may in some embodiments be configured to support the child seat at a predetermined distance from the upper surface portion of the base. In addition or alternatively, the primary support portion may in some embodiments be configured as a stationary support portion.

In some embodiments, the primary support portion may comprise an upper portion supported by a pillar portion in an overhanging manner so that an overhang portion of the upper portion is available for establishing the positive locking. In some embodiments, the circumferential recess is limited by a lower surface of the upper portion and an outer surface of the pillar portion. In some embodiments, the pillar portion may be at least partially tapered towards the upper portion.

In some embodiments, the upper portion comprises a layer construction with an upper layer and a lower layer supporting the upper layer. In some embodiments, the upper layer may be configured to get in sliding contact with a lower support surface of the child seat to be supported. In some embodiments, the lower layer comprises a higher rigidity than the upper layer. In addition or alternatively, the upper layer may in some embodiments comprise a low friction material configured to get in sliding contact with the child seat. Such low friction material may include for example a synthetic material, for example polyoxymethylene. In addition or alternatively, the lower layer may in some embodiments comprise a metal material. In addition or alternatively, the upper layer may in some embodiments at least partially surround an outer edge region of the lower layer. An underside of the lower layer may be exposed or uncovered such that the engaging member of a mounted child seat may directly get in contact with the lower layer. In some embodiments, the upper layer comprises a sliding surface extending around a recess. In some embodiments, the sliding surface may comprise an annular shape.

In some embodiments, the primary support portion may be configured as a hollow body. Such hollow body may be closed at the top and may define an accommodating space in its interior. In some embodiments, the accommodating space is configured to receive a portion of a tensioning mechanism and/or a sensor of a sensor arrangement.

In some embodiments, the base comprises at least one secondary support portion. In some embodiments, the secondary support portion is radially spaced from the primary support portion. In some embodiments, the secondary support portion may be configured to receive a restraining portion of the child seat. In some embodiments, the secondary support portion may be configured to receive the restraining portion of the child seat by rotating the child seat about the rotation axis after the child seat was inserted on the primary support portion.

In some embodiments, the at least one secondary support portion is configured to limit a tilting movement of the child seat about a second rotation axis extending perpendicular to the rotation axis. In some embodiments, at least one secondary support portion comprises an urging member. The urging member may be a leaf spring. The urging member may be provided to exert on the restraining portion an urging force in a second direction opposite to the first direction when the restraining portion is received in the secondary support portion.

In some embodiments, an insertion geometry of at least one secondary support portion is mechanically coated to block the child seat from being positioned in a predetermined orientation. Such predetermined orientation may be a forward facing orientation of the child seat. In some embodiments, the secondary support portion may comprise an abutment portion configured to limit a rotation of the child seat about the rotation axis towards a forward facing orientation. In some embodiments, the abutment portion may be configured to contact a stop portion provided on the child seat. In some embodiments, the abutment portion comprises abutment surfaces configured to contact stop portion surfaces. In some embodiments, the abutment surfaces are formed such that the stop portion is urged in a second direction opposite to the first direction when the stop portion is pushed against the abutment portion upon rotating the child seat. The abutment surfaces may be inclined.

In some embodiments, the at least one secondary support portion is configured such that a rotation of the child seat about the rotation axis is automatically blocked when reaching a rearward facing orientation upon rotating the same about the primary support portion. In addition or alternatively, at least one secondary support portion may in some embodiments be configured such that the child seat is normally blocked from reaching the forward facing orientation and only rotatable to the forward facing orientation upon actuation of an actuating member by a user. In some embodiments, the actuating member is a release member of a locking mechanism for locking a rotation of the child seat about the rotation axis.

In some embodiments, the locking mechanism is configured operable by an operating force exerted thereon by the child seat. In some embodiments, the operating force may be generated by transferring a rotational force exerted on the child seat into the operating force. In some embodiments, the locking mechanism may comprise a locking member. The locking member may be movable between a locking position in which it can engage with the restraining portion of the child seat and a release position in which a rotation of the child seat about the rotation axis is not blocked. In the release position, the locking member is disengaged from the restraining portion. In some embodiments, the locking member may be biased by an urging member such that a movement of the locking member towards the release position is possible against an urging force exerted by the urging member. In some embodiments, the locking member may comprise a force receiving surface extending such that the operating force can be generated through sliding contact of a force application surface on the child seat and the force receiving surface when the child seat is rotated about the rotation axis.

In some embodiments, the secondary support portion comprises a holding structure for blocking a lifting of the inserted restraining portion from the base for preventing a rotational movement of the child seat in case of a crash. In some embodiments, the holding structure comprises a holder. The holder may comprise a catching portion configured to receive the restraining portion of the child seat. The catching portion may comprise a hook shape.

In some embodiments, the holder is force transmittingly coupled to a coupling portion which is configured to be engaged with a fixing structure in the vehicle seat. In some embodiments, the coupling portion may be provided on a coupling arrangement. The coupling arrangement may comprise a connector, for example a coupling arm such as an Isofix arm.

In addition or alternatively, the coupling portion may in some embodiments be held on the base adjustably on the coupling portion to allow a tensioning of the base on the vehicle seat.

In some embodiments, the holder may be force transmittingly coupled to the coupling portion by means of a force transfer path comprising rigid force transfer links. The force transfer links may be metal force transfer links. In some embodiments, the force transfer path only comprises metal force transfer links and all of the rigid force transfer links are metal force transfer links. In some embodiments, the force transfer links may comprise a coupling portion support frame. The coupling portion support frame may comprise a connector support frame or coupling portion support frame. The coupling portion support frame may comprise a U-shaped housing. The coupling portion may be supported on the coupling portion support frame. The force transfer links may also comprise a coupling member, for example a rod, for coupling the holder to the coupling portion support frame. In some embodiments, the holder is coupled to the coupling portion support frame only by a single coupling member.

In some embodiments, a child seat couplable to a base is disclosed. The base may be a base as described before or further below. In some embodiments, the child seat comprises an interface portion releasably engageable with the primary support portion. In some embodiments, the interface portion comprises a recess which is configured to receive the primary support portion. In particular, the recess may be configured to receive the primary support portion in the first direction. An insertion direction of the child seat may be a direction opposite to the first direction. Accordingly, when the child seat is inserted on the base, the primary support portion may be received in the child seat. In some embodiments, the interface portion may comprise a support surface which is configured to get in contact with a longitudinal end portion of the primary support portion.

In some embodiments, the child seat may comprise a locking mechanism for releasably locking the child seat on the primary locking portion. The locking mechanism may comprise an engaging portion arranged radially movable into and out of the recess, to be able to engage with the primary support portion, for example with a circumferential recess of the primary support portion. In some embodiments, the locking mechanism may comprise an operating member for retracting the engaging portion.

In some embodiments, an opening end portion of the recess may be defined by an inclined circumferential wall portion in which an outer diameter of the recess is reduced from an opening towards the support surface. In other words, the recess may comprise a chamfer portion providing a centering function when inserting the child seat on the base and facilitating the insertion of the child seat on the primary support portion.

In some embodiments, the operating member may be positioned on the child seat such that it is only accessible when the child seat is rotated to an unlocking orientation which is different from a front or rear facing orientation of the child seat on the base. In some embodiments, the operating member is provided on a bottom surface of the child seat. In some embodiments, the operating member is provided at a position of the child seat such that it is covered by the base when the child seat is in a front or rear facing orientation and is exposed only in the unlocking orientation. The operating member may be provided at a foot end of the child seat.

In some embodiments, a child restraint system comprising a base and a child seat is disclosed. The base may be configured as described before or may be configured as described below with respect to further embodiments and modifications. The child seat may comprise one or more of the features as described before and may in addition or alternatively comprise one or more of the features that will be described further below with respect to further embodiments and modifications.

Other features of the present invention will be apparent from consideration of the information contained above as well as in or in combination with the following detailed description, drawings and claims. The present invention is illustrated by way of example, and not by way of limitation, in the Figures of the accompanying drawings.

### BRIEF DESCRIPTION OF THE DRAWINGS

The accompanying drawings, which are incorporated herein and form part of the specification, illustrate possible configurations of embodiments and, together with the description, further serve to explain the principles of the embodiments and to enable a person skilled in the art to make and use the embodiments. It is noted that the same or similar parts in the different figures are denoted by the same reference signs.
Fig. 1 shows a perspective view of a base according to an exemplary configuration.
Fig. 2 shows a side view of the base illustrated in Fig. 1.
Fig. 3 shows a sectional view of a primary support portion of the base according to an exemplary configuration.
Fig. 4 shows a perspective view of an exemplary configuration of an engaging portion which is engageable with the primary support portion illustrated in Fig. 3.
Fig. 5 shows a bottom view of an exemplary configuration of an interface of the child seat.
Fig. 6 shows a schematic plan view of components of a locking mechanism which may be used in the exemplary configuration illustrated in Fig. 5.
Fig. 7 shows a perspective view from below of an exemplary configuration of a child restraint system.
Fig. 8 shows a schematic illustration of a dropping zone in which a child seat may be coupled on the base.

The features and advantages of embodiments will become more apparent from the detailed description as given below when taken in conjunction with the drawings, in which like reference signs identify corresponding elements throughout. In the drawings like reference numbers generally indicate identical, functionally similar and/or structurally similar elements.

### DETAILED DESCRIPTION

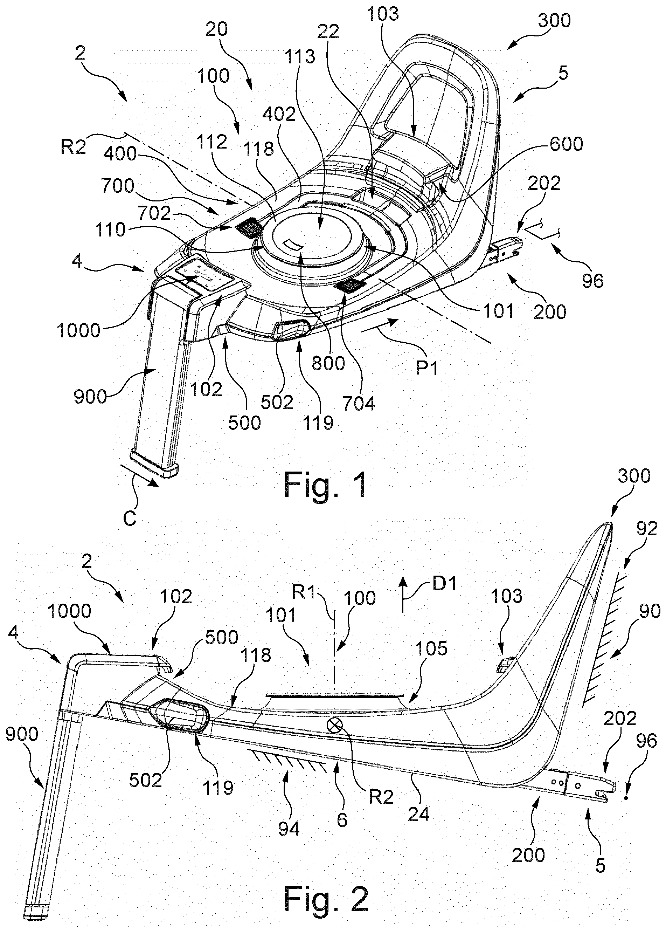

Example configurations of a base can be gathered from Figs. 1 and 2. The base 2 is configured to be coupled to a vehicle seat and configured to support a child seat thereon. Therefore, the base 2 may comprise different arrangements and features relating to the coupling of the base 2 to the vehicle seat and features and configurations relating to the coupling of a child seat (not shown in Fig. 1 and Fig. 2) on the base 2.

The base 2 comprises a main body 20 configured to be positioned on the vehicle seat. On a front portion 4 of the base 2, a load leg 900 is pivotably coupled to the main body 20.

At a rear portion 5 of the base 2, an anti-rebound portion 300 may be provided. The anti-rebound portion 300 may be configured to get in surface contact with a backrest 92 of a vehicle seat 90.

The base 2 may further comprise a coupling interface 100. The coupling interface 100 is configured to establish a releasable locking with a child seat to be supported on the base 2. Different types of child seats may be supported on the base 2, including a toddler seat or an infant seat.

Furthermore, the base 2 may comprise a coupling arrangement 200 for coupling the base 2 to a fixing structure 96 in the vehicle seat 90. For that, the coupling arrangement 200 may comprise a coupling portion 202 which is releasably engageable with the fixing structure 96.

The base 2 may comprise a tensioning mechanism 400 configured to generate an urging force for urging the base 2 onto the vehicle seat 90 once the base 2 is operatively coupled to the fixing structure 96 of the vehicle seat 90, for example by means of the coupling portion 202.

The base may furthermore comprise a holding structure 600 configured to securely retain a child seat on the base 2 in case of a crash.

The base 2 may further comprise a release mechanism 700 configured to release the coupling portion 202 from the fixing structure 96 and/or may be configured to release the tensioning mechanism 400 and/or may be configured to release a movement of the coupling portion 202 relative to the anti-rebound portion 300.

As is further illustrated in Fig. 1, the base 2 may comprise a sensor arrangement 800 comprising one or more sensors for detecting specific states or conditions of the base 2 and/or a child seat supported on the base 2.

The base may further comprise a display portion 1000 configured to provide centralized information on the status of the child restraint system.

The base 2 may comprise a locking mechanism 500 for locking a rotation of a child seat about a rotation axis.

While in Figs. 1 and 2 and also in multiple of the following described figures, a configuration of the base 2 is shown in which all of the latter specific mechanisms and arrangements are provided, it is noted that it is possible to individually implement the latter features, arrangements and mechanisms.

The coupling interface 100, the coupling arrangement 200, the anti-rebound portion 300, the tensioning mechanism 400, the locking mechanism 500, the holding structure 600, the release mechanism 700, the sensor arrangement 800, the load leg 900 and the display portion 1000 may be seen as individual functional blocks which may be implemented individually or in combination with one or more of the other functional blocks.

A possible configuration of a coupling interface 100 of the base 2 will be described in the following. As already illustrated in Figs. 1 and 2, the coupling interface 100 may comprise a primary support portion 101. The primary support portion 101 may protrude from an upper surface portion 118 of the base 2 in a first direction D1. In the present configuration, the first direction corresponds to an upward direction. The primary support portion 101 is configured to be releasably engaged by an engaging portion of an inserted child seat in a positive locking manner for blocking a movement of the child seat in the first direction D1. The configuration of such a child seat will be described later. The primary support portion 101 is furthermore configured to support the child seat rotatable about a rotation axis R1 extending parallel to the first direction D1. In the present configuration, the primary support portion 101 comprises a circumferential recess 105 configured for an engagement with the child seat.

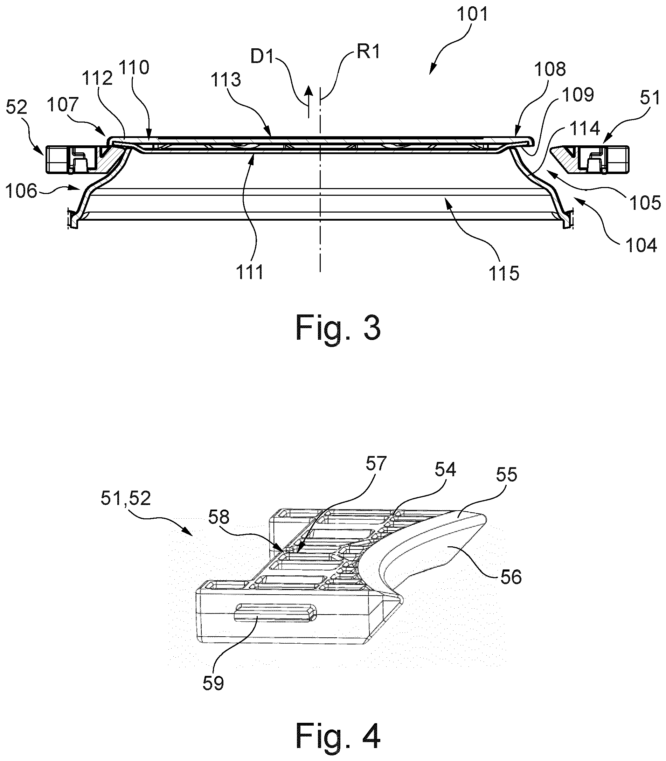

Fig. 3 shows an enlarged sectional view of the primary support portion 101. The primary support portion 101 may be formed as protrusion. The primary support portion 101 may comprise a lateral outer surface 104. The lateral outer surface 104 fully extends about the primary support portion 101, more precisely about the rotation axis R1 defined by the primary support portion 101. Due to the shape of the lateral outer surface 104, the primary support portion 101 is configured to allow a 360° rotation of an inserted child seat. In other words, if the coupling interface 100 only comprises the primary support portion 101 as described, an inserted child seat could be rotated 360° about the rotation axis R1 and could be inserted on the primary support portion at an arbitrary orientation.

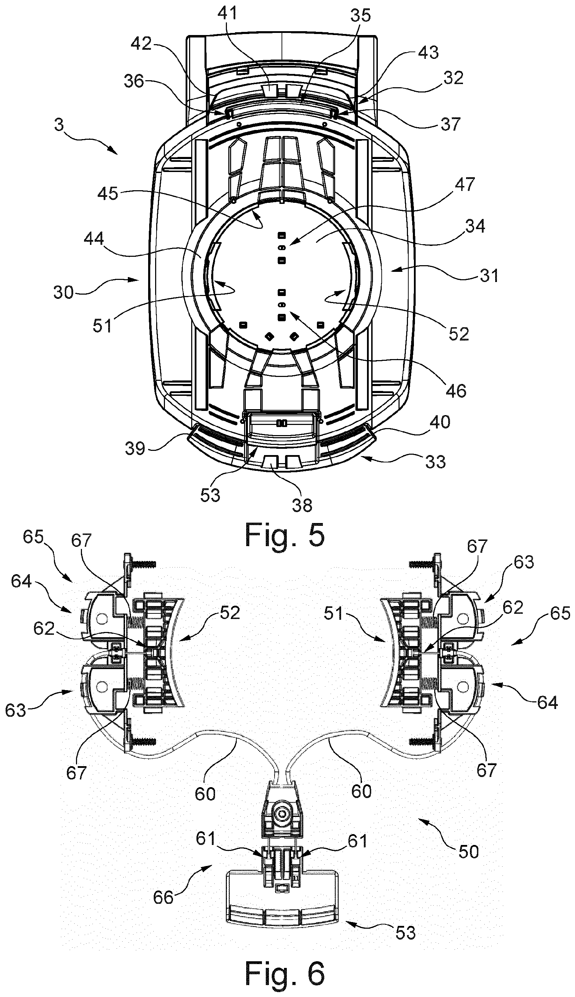

The primary support portion 101 comprises a circumferential recess 105 provided in the lateral outer surface 104. The circumferential recess 105 is configured for receiving an engaging portion 51, 52 of a child seat 3 (shown in Fig. 5) for establishing a positive locking between the child seat and the primary support portion 101. In Fig. 3, a first engaging portion 51 is shown in a disengaged state in which it is laterally spaced from the primary support portion 101. Furthermore, a second engaging portion 52 is shown in an engaged state in which a portion of the engaging portion is inserted into the circumferential recess 105. In this way, a movement of the engaging portion 52 in the first direction D1 is blocked by a contact of the engaging portion with the primary support portion 101.

As is also visible from Fig. 3, the primary support portion 101 according to the exemplary configuration comprises an overall cone-like appearance. In particular, the primary support portion 101 as shown in Fig. 3 has the shape of a truncated cone with a free upper end of narrower dimension. Since the engaging portions 51 are configured to be engaged from laterally outside of the primary support portion 101, it is possible to couple the child seat to the primary support portion 101 in arbitrary angular orientations about the rotation axis R1. In other words, the primary support portion 101 does not make it necessary to exactly position the child seat in a predetermined angular orientation for allowing the coupling of the child seat to the primary support portion 101. Such a configuration provides an increased angular drop zone in which a child seat may be inserted on the primary locking portion 101.

The primary support portion may be configured to bear the main weight of a mounted child seat. Accordingly, in an exemplary configuration, the main weight of a mounted child seat may be borne by an upper portion of the primary support portion 101. In some embodiments, the weight of the child seat may be fully supported by the primary support portion 101. In some embodiments, the primary support portion may be configured to support the child seat at a predetermined distance from the upper surface portion 118 of the main body 20 of the base 2. The primary support portion 101 may be configured as a stationary support portion. Accordingly, if a child seat is inserted on and coupled to the primary support portion 101, the child seat may be rotated about the primary support portion 101. It is also possible to provide an arrangement in which the primary support portion 101 is configured rotatable together with an inserted child seat.

The primary support portion 101 may comprise an upper portion 107 supported by a pillar portion 106 in an overhanging manner. In this way, an overhang portion 108 is provided. As is shown in Fig. 3, the overhang portion 108 is available for establishing the positive locking between the child seat and the primary support portion 101. For example, the beforementioned circumferential recess 105 may be limited by a lower surface 109 of the upper portion 107 and an outer surface 114 of the pillar portion 106. The pillar portion 106 may be at least partially tapered towards the upper portion 107. The primary support portion 101 may comprise a mushroom-like shape.

The upper portion 107 may comprise a layer construction. The upper portion 107 may comprise an upper layer 110 and a lower layer 111. The lower layer 111 may be configured to support the upper layer 110. The upper layer 110 may be configured to get in sliding contact with a lower support surface of the child seat to be supported. Figs. 4 to 6 show details of a child seat 3 which may be supported on the primary support portion 101. The already mentioned support surface 34 is visible in Fig. 5 and the features of the child seat 3 will be described later in greater detail.

The lower layer 111 may comprise a higher rigidity than the upper layer 110. The upper layer 110 may comprise a low friction material. The low friction material may be a synthetic material. For example, the low friction material used according to some embodiments may comprise polyoxymethylene. The low friction material is configured to get in sliding contact with the child seat 3, more precisely with the before described lower support surface 34 of the child seat 3. Using a low friction material in the upper layer 110 reduces forces that are necessary for rotating an inserted child seat 3 on the primary support portion 101. The lower layer 111 may comprise a metal material. The upper layer 110 may at least partially surround an outer edge region of the lower layer 111. In this way, a contact between the lower support surface 34 of the child seat 3 with the lower layer 111 is prevented. As is also shown in Fig. 3, the underside of the lower layer 111 may be exposed or uncovered such that the engaging member 51 of a mounted child seat 3 may directly get in contact with the lower layer 111.

As is shown in Fig. 1, the upper layer 110 comprises a sliding surface 112 extending around a recess 113. The upper layer 110 may comprise the shape of a circular plate with a central circumferential recess 113. The sliding surface 112 may comprise an annular shape as shown in Fig. 1. An annular sliding surface 112 provides for a controlled friction between an inserted child seat and the primary support portion 101 when the child seat 3 is rotated.

As illustrated in Fig. 3, the primary support portion 101 can be configured as a hollow body closed at the top and defining an accommodating space 115 in its interior. The accommodating space 115 can be configured to receive a portion of a tensioning mechanism 400 and/or a sensor of a sensor arrangement 800. In general, the accommodating space 115 is available for accommodating other portions of the base rendering the overall size of the base smaller.

A child seat 3 which may be coupled to the base 2 as described before, in particular to the primary support portion 101, will be described in the following. Figs. 4 to 7 illustrate possible configurations of the child seat 3.

Fig. 5 shows a bottom view of a child seat 3 according to an embodiment. The child seat 3 may comprise an interface portion 30 which is releasably engageable with the primary support portion 101. The interface portion 30 may comprise a recess 31 configured to receive the primary support portion 101 when inserting the child seat 3 on the base 2. When the child seat 3 is inserted on the base 2, an insertion direction of the child seat 3 is opposite to the before described first direction D1 in which the primary support portion 101 protrudes from the base 2. Accordingly, in a mounted condition of the child seat 3 on the base 2, the recess 31 extends in first direction D1 in order to be able to receive the primary support portion 101.

The interface portion 30 comprises a support surface 34 configured to get in contact with a longitudinal end portion of the primary support portion 101. The longitudinal end portion of the primary support portion 101 may be a free end portion of the primary support portion 101. For example, the longitudinal end portion of the primary support portion 101 may correspond to the above-described upper portion 107 of the primary support portion 101. The support surface 34 may be a flat surface. The support surface 34 may be configured to get in sliding contact with the upper portion 107 of the primary support portion 101. Accordingly, when the child seat 3 is rested on the primary support portion 101, the support surface 34 is in contact with the upper portion 107. As described before, the upper portion 107 may comprise a sliding surface 112 which may comprise an annular shape. Accordingly, in some embodiments, the support surface 34 is configured to get in contact with an annular sliding surface 112. As described before, the upper portion 107 of the primary support portion 101 may comprise a layer construction with an upper layer 110. This upper layer 110 may comprise a low friction material for keeping a friction between the child seat and the primary support portion 101 low when rotating the child seat 3 contacting the upper portion 107 about the rotation axis R1. The support surface 34 of the child seat 3 does in some configurations not comprise a low friction material. The support surface 34 may comprise any suitable material, for example polyethylene material or another material. In some embodiments, however, the seat surface may also comprise a low friction material.

The child seat 3 may further comprise a locking mechanism 50 for releasably locking the child seat 3 on the primary support portion 101. In some embodiments, the locking mechanism 50 may be configured to engage behind the overhang portion 108 if the primary support portion 101 comprises such an overhang portion 108. The locking mechanism 50 may comprise an engaging portion 51, 52 arranged radially movable into and out of the recess 31 to be able to engage with the circumferential recess 105 of the primary support portion 101. The recess 31 may be defined by the support surface 34 and a wall surface of a wall portion 45 extending from the support surface 34. The engaging portions 51, 52 may be arranged in openings of the wall portion 45. As is shown in the configuration according to Fig. 5, the engaging portions 51, 52 may in some embodiments be provided on opposite sides of the recess 31. The engaging portions 51, 52 may be arranged movable towards and away from each other. The engaging portions 51, 52 are arranged at a distance from the support surface 34 such that when the engaging portions 51, 52 are in a locking position in which they protrude into the recess 31, a space for accommodating a portion of the primary support portion 101 between the engaging portions 51, 52 and the support surface 34 is provided. For example, the latter space may be configured to at least partially accommodate the earlier described overhang portion 108 of the primary support portion 101.

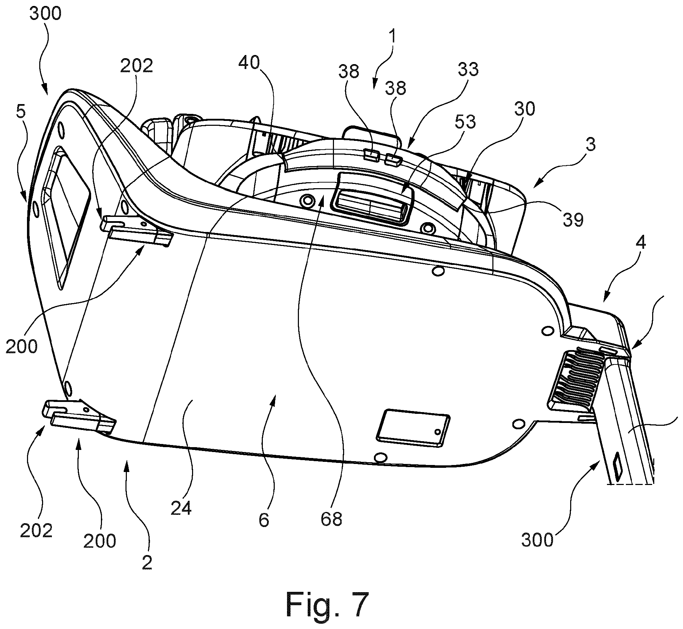

The locking mechanism 50 may further comprise an operating member 53 for retracting the engaging portions 51, 52. The operating member 53 may in some embodiments be positioned on the child seat 3 such that it is only accessible when the child seat 3 is rotated to an unlocking orientation different from a front or rear facing orientation of the child seat 3. Such an unlocking orientation of the child seat 3 is shown in Fig. 7. The operating member 53 may be provided on a bottom portion of the child seat 3, for example in a bottom surface 68 of the child seat 3. Furthermore, the operating member 53 may be provided at a position such that it is covered by the base when the child seat is in front or rear facing orientation and is exposed only in the unlocking orientation.

In Fig. 7, an unlocking orientation of the child seat 3 is shown. In the unlocking orientation, the main extension direction of the child seat 3 which corresponds to a viewing direction of a seated child, is inclined with respect to a main extension direction of the base 2, which main extension direction of the base 2 may correspond to a longitudinal direction of the base 2 or a direction of travel of vehicle in which the base 2 is mounted. In the configuration as shown in Fig. 7, the main extension direction of the child seat 3 extends about 90° with respect to the main extension direction of the base 2. Furthermore, the width of the bottom portion of the interface 30 of the child seat 3 and the width of the base 2 are narrower than the length of the bottom portion of the interface 30 of the child seat 3. Thus, when rotating the child seat 3 into the orientation as shown in Fig. 7, a forward end portion which may correspond to a foot end of the child seat 3 protrudes beyond a lateral edge portion of the base 2. As is shown in Fig. 7, the operating member 53 may be provided at such forward end portion of the child seat 3 in the bottom surface 39. Due to this configuration, the operating member 53 is accessible in the orientation shown in Fig. 7 and is revealed or hidden when the child seat 3 is rotated into a driving position in which the main extension direction of the seat and the main extension direction of the base are in parallel.

Further details of the locking mechanism 50 will be described with reference to Figs. 4 and 6. Fig. 4 shows a possible configuration of an engaging portion 51, 52. Fig. 6 shows an interior configuration of a mechanism for operating the engaging portions 51, 52, in particular the mechanism for operatively coupling the operating member 53 with the engaging portions 51, 52. Accordingly, Fig. 6 shows details of the construction of a locking mechanism 50 according to some embodiments.

As already described before, the locking mechanism 50 may comprise an operating member 53. In the present configuration, the operating member 53 is configured to be pulled by a user. More precisely, the operating member 53 is configured to be pulled by a user in a main extension direction of the seat 3. The operating member 53 may be provided at an edge portion of the seat 3. Furthermore, the operating member 53 may be provided in, for example integrated in, the bottom surface 68 of the seat 3. The operating member 53 may be arranged at an edge portion of the seat interface 30. In particular, the operating member 53 may be provided at a foot end portion of the seat 3. The operating member 53 is configured to be grasped by a user. For that, the operating member 53 may comprise a recess for receiving the tip ends of fingers of a user. The operating member 53 is operatively coupled to the engaging portions 51, 52. For that, force transmitting members 60 coupling the operating member 53 with the engaging portions 51, 52 are provided. Each force transmitting member 60 may comprise a Bowden cable.

The force transmitting member 60 may be part of a force transmitting mechanism used for operatively coupling the operating member 53 to the engaging portions 51, 52. The locking mechanism 50 may be configured such that a movement direction of the engaging portions 51, 52 extends across to a movement direction of the operating member 53. In the example shown in Fig. 6, the movement direction of the engaging portions 51, 52 is substantially perpendicular to the movement direction of the operating member 53. The locking mechanism 50 may be configured such that a pulling action effected on the operating member 53 leads to a movement of the engaging portions 51, 52 in retraction direction, for example to a movement of the engaging portions 51, 52 away from each other in opposite directions. The engaging portions 51, 52 may be biased in locking direction by means of an urging member 67. In the shown configuration, the urging member 67 may be configured to directly apply an urging force on the engaging portions 51, 52. However, it is also possible to implement configurations, in which the urging force of the urging member is indirectly applied on the engaging portions 51, 52 by means of a force transfer member, for example by means of the before described force transmitting member 60. In this case, however, the force transmitting member may be preferably provided as a rigid member, for example a bar or rod, to be able to transmit a sufficiently high urging force on the engaging portions 51, 52.

In the configuration as shown in Fig. 6, it is shown that the engaging portions 51, 52 may be arranged movable with respect to a supporting portion 65. The supporting portions 65 may be configured to suitably hold and guide the force transmitting member 60 such that a proper connection to the engaging portions 51, 52 allowing a sufficient force transfer is possible. The supporting portions 65 each comprise guiding portions 63, 64. The guiding portions 63, 64 are configured to securely hold the force transmitting members 60. In the configuration as shown in Fig. 6, the force transmitting members 60 are Bowden cables and the guiding portions 63, 64 are configured to hold the Bowden cables with a predetermined curvature allowing an optimum function of the Bowden cables.

The supporting portions 65 may be configured symmetrically such that they can be used on opposite sides of the recess 31. For that, the supporting portions 65 may comprise two guiding portions 63, 64 although only one guiding portion is necessary for operating the engaging portions 51, 52. By using such a symmetrical construction, it is possible to reduce the manufacturing costs since the supporting portions 65 can be used at different positions. The urging members 67 may be supported on an inner surface of the supporting portions 65 at one end and may be supported on the engaging portions 51, 52 at an opposite end. Accordingly, the urging members 67 may be sandwiched between the supporting portions 65 and the engaging portions 51, 52.

As is shown in the configuration of Fig. 6, an end portion of the Bowden cable 60 can be coupled to a central portion of the engaging portions 51, 52. In this case, two urging members 67 may be provided on opposite sides of a connected Bowden cable. In this way, a proper force application on the engaging portions 51, 52 is possible without effecting any tilting movement of the engaging portions 51, 52. A first end portion 61 of the force transmitting member 60, in the present case a Bowden cable, is coupled to the operating member. A second end portion 62 of the force transmitting member 60 is coupled to an engaging portion 51, 52. Since the supporting portions 65, the engaging portions 51, 52 and the force transmitting members 60 are configured identical, an operation of the operating member 53 leads to a simultaneous operation of the engaging portions 51, 52 in the same extent.

A possible configuration of the engaging portions 51, 52 is shown in Fig. 4. The engaging portions 51, 52 may each comprise a locking member 54 which may be provided by a rigid main body. The locking member 54 may comprise guiding portions 59 protruding from lateral sides of the locking member 54. At a rear end portion, the locking member 54 may comprise a recess 57 for accommodating an end portion of the force transmitting member 60 and an opening 58 allowing to pass the force transmitting member into the recess 57. A forward end portion of the locking member 54 may form an engaging portion of the locking member 54. The engaging portion may comprise a locking surface 55 and optionally a guiding surface 56. The locking surface 55 is oriented in upward direction so as to be able to get in contact with the overlap portion 108 of the primary support portion 101, for instance. The guiding surface 56 may be oriented in downward direction, for example away from the support surface 34 when the engaging portion 51 is mounted on the interface 30 of the seat 3. The guiding surface 56 is tapered and configured to get in contact with an outer edge portion of an upper portion 107 of the primary support portion 101. The guiding surface 56 may be configured such that when it is contacted with the upper portion 107 of the primary support portion 101 upon mounting the seat 3 on the primary support portion 101, an urging force pushing the engaging portions 51, 52 in retraction direction is generated. In this way, a movement of the engaging portions 51, 52 into a retracted position is automatically effected by pushing the guiding surface 56 on the upper portion 107. More precisely, the guiding surface 56 is configured to slide on an outer edge region of the upper portion 107 and due to the tapering of the guiding surface 56, the engaging portions 51, 52 are urged towards the retracted position. As soon as the engaging portions 51, 52 have passed the overhang portion 108, they are free to engage with the circumferential recess 105. Due to the presence of the urging members 67, the engaging portions 51, 52 are then automatically engaged with the circumferential recess 105. Accordingly, it is not necessary that a user operates the operating member 53 for inserting the child seat 3 on the primary support portion 101.

As is further illustrated in Fig. 5, the recess 31 of the child seat 3 may be configured with an inclined circumferential wall portion 44 at an opening end portion of the recess 31. In this inclined circumferential wall portion 44, an outer diameter of the recess 31 is reduced from an opening towards the support surface 34 at least over a predetermined distance. In other words, in the opening end portion of the recess 31, the outer diameter of the recess may be widened up to a diameter which is larger than the diameter of the upper portion 107 of the primary support portion 101. With such a construction, mounting of the seat 3 on the primary support portion 101 is facilitated since the opening for receiving the upper portion 107 is enlarged. Furthermore, such a construction provides a centering function since the seat 3 is automatically centered with respect to the primary support portion 101 through a sliding contact of the inclined circumferential wall portion 44 with the upper portion 107 of the primary support portion 101.

As is illustrated in Figs. 1 and 2, the base 2 may comprise a secondary support portion 102, 103. In this exemplary configuration, two secondary support portions 102, 103 are provided. A first secondary support portion 102 is provided in a forward end portion of the base 2. A second secondary support portion 103 is provided in a rear portion of the base 2. The secondary support portions 102, 103 may be radially spaced from the primary support portion 101. Each of the secondary support portions 102, 103 may be configured to receive a restraining portion 32, 33 of a child seat 3. In this connection, reference is made to Figs. 5 and 7 in which restraining portions 32, 33 of the child seat 3 are shown. The function and configuration of the restraining portions 32, 33 will be described later in greater detail. At least one secondary support portion 102, 103 is configured to receive the restraining portion 32, 33 of the child seat 3 by rotating the child seat 3 about the rotation axis R1 after the child seat 3 was inserted on the primary support portion 101. Accordingly, the secondary support portion 102, 103 and the restraining portion 32, 33 may be configured such that the restraining portion 32, 33 may only be rotationally inserted into the secondary support portion 102, 103. Each secondary support portion 102, 103 may be configured to limit a tilting movement of the child seat 3 about a second rotation axis R2 extending perpendicular to the rotation axis R1.

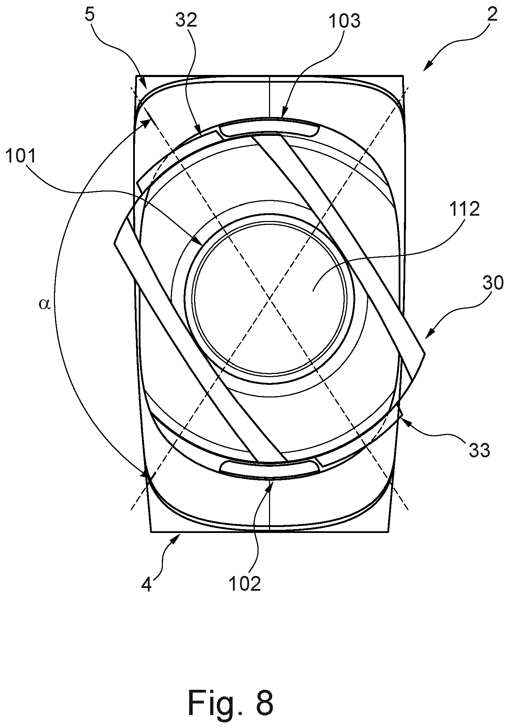

The secondary support portions 102, 103 and the restraining portions 32, 33 of the child seat 3 may be configured such that an insertion of the child seat 3 on the base 2 is possible within a predetermined dropping zone. The dropping zone may be seen as an angular range α in which the child seat 3 needs to be oriented for coupling the same to the base 2. Within this angular range, the restraining portions 32, 33 are oriented such that they do not overlap with the secondary support portions 102, 103 when viewed from above and can laterally pass the secondary support portions 102, 103. Such a dropping zone is illustrated in Fig. 8 and the angular range may be greater than 90° on each lateral side of the primary support portion 101. Preferably, the range is greater than 100°, for example 112°.

## Claims

1. Base (2) for a child restraint system (1), comprising
a primary support portion (101) protruding from an upper surface portion (118) of said base (2) in a first direction (D1),
wherein said primary support portion (101) is configured to be releasably engaged by an engaging portion (51, 52) of an inserted child seat (3) in a positive locking manner for blocking a movement of said child seat (3) in said first direction (D1), and is configured to support said child seat (3) rotatable about a rotation axis (R1) extending parallel to said first direction (D1),
wherein a lateral outer surface (104) of said primary support portion (101) comprises a circumferential recess (105) configured for receiving said engaging portion (51) of said child seat (3) for establishing said positive locking, thereby allowing to couple said child seat (3) to said primary support portion (101) in multiple arbitrary angular orientations about said rotation axis (R1).

2. Base (2) according to claim 1,
wherein said primary support portion (101) is configured to bear the main weight of a mounted child seat (3), and/or
wherein said primary support portion (101) is configured to support said child seat (3) at a predetermined distance from said upper surface portion (118), and/or
wherein said primary support portion (101) is configured as a stationary support portion.

3. Base (2) according to one of the preceding claims,
wherein said primary support portion (101) comprises an upper portion (107) supported by a pillar portion (106) in an overhanging manner so that an overhang portion (108) of said upper portion (107) is available for establishing said positive locking,
wherein preferably said circumferential recess (105) is limited by a lower surface (109) of said upper portion (107) and an outer surface (114) of said pillar portion (106),
wherein said pillar portion (106) is preferably at least partially tapered towards said upper portion (107).

4. Base (2) according to one of the preceding claims, wherein said upper portion (107) comprises
a layer construction with an upper layer (110) and a lower layer (111) supporting said upper layer (110),
wherein said upper layer (110) is configured to get in sliding contact with a lower support surface (34) of said child seat (3) to be supported.

5. Base (2) according to claim 4,
wherein said lower layer (111) comprises a higher rigidity than said upper layer (110), and/or
wherein said upper layer (110) comprises a low friction material, in particular a synthetic material, for example polyoxymethylene, configured to get in sliding contact with said child seat (3), and/or
wherein said lower layer (111) comprises a metal material, and/or
wherein said upper layer (110) at least partially surrounds an outer edge region of said lower layer (111),
wherein preferably an underside of said lower layer (111) is exposed or uncovered such that said engaging member (51, 52) of a mounted child seat (3) may directly get in contact with said lower layer (111).

6. Base (2) according to one of claims 4 and 5,
wherein said upper layer (110) comprises a sliding surface (112) extending around a recess (113),
wherein preferably said sliding surface (112) comprises an annular shape, and/or
wherein preferably said primary support portion (101) is configured as a hollow body closed at the top and defining an accommodating space (115) in its interior, wherein said accommodating space (115) is configured to receive a portion of a tensioning mechanism (400) and/or a sensor of a sensor arrangement.

7. Base (2) according to one of the preceding claims, further comprising
at least one secondary support portion (102, 103) radially spaced from said primary support portion (101) and configured to receive a restraining portion (32, 33) of said child seat (3) by rotating said child seat (3) about said rotation axis (R1) after said child seat (3) was inserted on said primary support portion (101),
said at least one secondary support portion (102, 103) being configured to limit a tilting movement of said child seat (3) about a rotation axis (R2) extending perpendicular to said rotation axis (R1), wherein preferably
at least one secondary support portion (102, 103) comprises an urging member (609), for example a leaf spring (610), said urging member (609) being provided to exert on said restraining portion (32, 33) an urging force in a second direction (D2) opposite to the first direction (D1) when said restraining portion (32, 33) received in said secondary support portion (102, 103).

8. Base (2) according to claim 7,
wherein an insertion geometry of at least one secondary support portion (103) is mechanically coded to block said child seat (3) from being positioned in a predetermined orientation, in particular a forward-facing orientation of said child seat (3), and/or
wherein said secondary support portion (103) comprises an abutment portion (120) configured to limit a rotation of said child seat (3) about said rotation axis (R1) towards a forward-facing orientation,
said abutment portion (120) being preferably configured to contact a stop portion (35) provided on said child seat (3) and preferably comprises abutment surfaces (121, 122) configured to contact stop portion surfaces (36, 37),
wherein preferably said abutment surfaces (121, 122) are formed, in particular inclined, such that said stop portion (35) is urged in a second direction (D2) opposite to the first direction (D1) when said stop portion (35) is pushed against said abutment portion (120) upon rotating said child seat (3).

9. Base (2) according to claim 7,
wherein at least one secondary support portion (102) is configured such that a rotation of said child seat (3) about said rotation axis (R1) is automatically blocked when reaching a rearward facing orientation upon rotating the same about said primary support portion (101), and/or such that said child seat (3) is normally blocked from reaching said forward facing orientation and only rotatable to said forward facing orientation upon actuation of an actuating member (119) by a user,
wherein preferably said actuating member (119) is a release member (502) of a locking mechanism (500) for locking a rotation of said child seat (3) about said rotation axis (R1),
wherein said locking mechanism (500) is configured operable by an operating force exerted thereon by said child seat (3), wherein said operating force may be generated by transferring a rotational force exerted on said child seat (3) into said operating force, in particular a pushing force,
wherein said locking mechanism (500) preferably comprises a locking member (501) which is movable between a locking position in which it can engage with said restraining portion (32, 33) and a release position in which a rotation of said child seat (3) about said rotation axis (R1) is not blocked,
wherein said locking member (501) is preferably biased by an urging member (503) such that a movement of said locking member (501) towards said release position is possible against an urging force exerted by said urging member (503), and
wherein said locking member (501) preferably comprises a force receiving surface (504) extending such that said operating force can be generated through sliding contact of a force application surface (42, 43) on said child seat (3) and said force receiving surface (504) when said child seat (3) is rotated about said rotation axis (R1).

10. Base (2) according to one of claims 7 to 9,
said secondary support portion (102, 103) comprising a holding structure (600) for blocking a lifting of said inserted restraining portion (32, 33) from said base (2) for preventing a rotational movement of said child seat (3) in case of a crash,
said holding structure (600) preferably comprising a holder (601),
said holder (601, 602) preferably comprising a catching portion (603, 604), preferably having a hook shape and configured to receive said restraining portion (32, 33) and
said holder (601, 602) being force transmittingly coupled to a coupling portion (202) configured to be engaged with a fixing structure (96) in the vehicle seat (90),
wherein said coupling portion (202) is preferably provided on a coupling arrangement (200), for example an isofix arm, and/or held on said base (2) adjustably on said coupling portion (202) to allow a tensioning of said base (2) on said vehicle seat,
wherein said holder (601, 602) is preferably force transmittingly coupled to said coupling portion (202) by means of a force transfer path comprising rigid force transfer links (605, 606, 607), preferably by means of metal force transfer links, more preferably only by metal force transfer links, and/or
wherein preferably said force transfer links comprise a coupling portion support frame (606, 607), for example an isofix arm support frame, in particular a U-shaped housing, on which said coupling portion (202) is supported, and a coupling member (605), for example a rod (608), for coupling said holder (601, 602) to said coupling portion support frame (606, 607),
wherein preferably said holder (601, 602) is coupled to said coupling portion support frame (606, 607) only by a single coupling member (605).

11. Child seat (3) couplable to a base (2) according to one of the preceding claims, said child seat (3) comprising
an interface portion (30) releasably engageable with said primary support portion (101), said interface (30) comprising a recess (31) configured to receive said primary support portion (101) in said first direction (D) and having a support surface (34) configured to get in contact with a longitudinal end portion of said primary support portion (101), and
a locking mechanism (50) for releasably locking said child seat (3) on said primary locking portion (101), said locking mechanism (50) comprising
an engaging portion (51, 52) arranged radially movable into and out of said recess (31) to be able to engage with said continuous circumferential recess (105) of said primary support portion (101), and
an operating member (53) for retracting said engaging portion (51, 52),
wherein preferably an opening end portion of said recess (31) is defined by an inclined circumferential wall portion (44) in which an outer diameter of said recess (31) is reduced from an opening towards said support surface (34).

12. Child seat (3) according to claim 11, wherein
said operating member (53) is positioned on said child seat (3) such that it is only accessible when said child seat (3) is rotated to an unlocking orientation different from a front or rear facing orientation of said child seat (3),
wherein preferably said operating member (53) is provided on a bottom surface of said child seat (3) and at a position such that it is covered by said base (2) when said child seat (3) is in a front or rear facing orientation and is exposed only in said unlocking orientation,
wherein said operating member (53) may be provided at a foot end of said child seat (3).

13. Child restraining system (1) comprising a base (2) according to one of claims 1 to 10 and a child seat (3) according to one of claims 11 and 12 releasably mountable on said base (2).

## Patentansprüche

1. Basis (2) für ein Kinderrückhaltesystem (1), umfassend
einen primären Trägerabschnitt (101), der von einem oberen Oberflächenabschnitt (118) der Basis (2) in eine erste Richtung (D1) hervorsteht,
wobei der primäre Trägerabschnitt (101) konfiguriert ist, um durch einen Eingriffsabschnitt (51, 52) eines eingesetzten Kindersitzes (3) auf eine formschlüssige Weise zum Verhindern einer Bewegung des Kindersitzes (3) in die erste Richtung (D1) lösbar in Eingriff gebracht zu werden, und konfiguriert ist, um den Kindersitz (3) um eine Drehachse (R1) herum drehbar zu tragen, die sich parallel zu der ersten Richtung (D1) erstreckt,
wobei eine seitliche Außenoberfläche (104) des primären Trägerabschnitts (101) eine umlaufende Aussparung (105) aufweist, die zum Aufnehmen des Eingriffsabschnitts (51) des Kindersitzes (3) zum Herstellen des Formschlusses konfiguriert ist, wodurch es möglich wird, den Kindersitz (3) in mehreren beliebigen Winkelausrichtungen um die Drehachse (R1) herum mit dem primären Trägerabschnitt (101) zu koppeln.

2. Basis (2) nach Anspruch 1,
wobei der primäre Trägerabschnitt (101) konfiguriert ist, um das Hauptgewicht eines montierten Kindersitzes (3) zu stützen, und/oder
wobei der primäre Trägerabschnitt (101) konfiguriert ist, um den Kindersitz (3) in einem zuvor bestimmten Abstand von dem oberen Oberflächenabschnitt (118) zu tragen, und/oder
wobei der primäre Trägerabschnitt (101) als ein stationärer Trägerabschnitt konfiguriert ist.

3. Basis (2) nach einem der vorstehenden Ansprüche,
wobei der primäre Trägerabschnitt (101) einen oberen Abschnitt (107) umfasst, der durch einen Säulenabschnitt (106) auf eine überhängende Weise getragen wird, sodass ein Überhangabschnitt (108) des oberen Abschnitts (107) zum Herstellen des Formschlusses verfügbar ist,
wobei die umlaufende Aussparung (105) vorzugsweise durch eine untere Oberfläche (109) des oberen Abschnitts (107) und eine Außenoberfläche (114) des Säulenabschnitts (106) begrenzt ist,
wobei der Säulenabschnitt (106) vorzugsweise mindestens teilweise in Richtung des oberen Abschnitts (107) verjüngt ist.

4. Basis (2) nach einem der vorstehenden Ansprüche, wobei der obere Abschnitt (107) umfasst
einen Schichtaufbau mit einer oberen Schicht (110) und einer unteren Schicht (111), die die obere Schicht (110) trägt,
wobei die obere Schicht (110) konfiguriert ist, um in Gleitkontakt mit einer unteren Trägeroberfläche (34) des zu tragenden Kindersitzes (3) zu gelangen.

5. Basis (2) nach Anspruch 4,
wobei die untere Schicht (111) eine höhere Steifigkeit als die obere Schicht (110) aufweist, und/oder
wobei die obere Schicht (110) ein reibungsarmes Material, insbesondere ein synthetisches Material, beispielsweise Polyoxymethylen, umfasst, das konfiguriert ist, um in Gleitkontakt mit dem Kindersitz (3) zu kommen, und/oder
wobei die untere Schicht (111) ein metallisches Material umfasst, und/oder
wobei die obere Schicht (110) einen äußeren Randbereich der unteren Schicht (111) mindestens teilweise umgibt,
wobei vorzugsweise eine Unterseite der unteren Schicht (111) derart freiliegt oder unbedeckt ist, dass das Eingriffselement (51, 52) eines montierten Kindersitzes (3) direkt mit der unteren Schicht (111) in Kontakt kommen kann.

6. Basis (2) nach einem der Ansprüche 4 und 5,
wobei die obere Schicht (110) eine Gleitoberfläche (112) umfasst, die sich um eine Aussparung (113) herum erstreckt,
wobei die Gleitoberfläche (112) vorzugsweise eine ringförmige Gestalt umfasst, und/oder
wobei der primäre Trägerabschnitt (101) vorzugsweise als ein Hohlkörper konfiguriert ist, der oben geschlossen ist und in seinem Inneren einen Unterbringungsraum (115) definiert, wobei der Unterbringungsraum (115) konfiguriert ist, um einen Abschnitt eines Spannmechanismus (400) und/oder eines Sensors einer Sensoranordnung aufzunehmen.

7. Basis (2) nach einem der vorstehenden Ansprüche, ferner umfassend
mindestens einen sekundären Trägerabschnitt (102, 103), der von dem primären Trägerabschnitt (101) radial beabstandet ist und konfiguriert ist, um einen Rückhalteabschnitt (32, 33) des Kindersitzes (3) durch Drehen des Kindersitzes (3) um die Drehachse (R1) herum aufzunehmen, nachdem der Kindersitz (3) auf den primären Trägerabschnitt (101) eingesetzt wurde,
wobei der mindestens eine sekundäre Trägerabschnitt (102, 103) konfiguriert ist, um eine Kippbewegung des Kindersitzes (3) um eine Drehachse (R2) herum zu begrenzen, die sich senkrecht zu der Drehachse (R1) erstreckt, wobei vorzugsweise
mindestens ein sekundärer Trägerabschnitt (102, 103) ein Druckelement (609), beispielsweise eine Blattfeder (610), umfasst, wobei das Druckelement (609) bereitgestellt ist, um auf den Rückhalteabschnitt (32, 33) eine Druckkraft in einer zweiten Richtung (D2) auszuüben, die der ersten Richtung (D1) entgegengesetzt ist, wenn der Rückhalteabschnitt (32, 33) in dem sekundären Trägerabschnitt (102, 103) aufgenommen ist.

8. Basis (2) nach Anspruch 7,
wobei eine Einsetzgeometrie mindestens eines sekundären Trägerabschnitts (103) mechanisch kodiert ist, um zu verhindern, dass der Kindersitz (3) in einer zuvor bestimmten Ausrichtung, insbesondere einer nach vorne gerichteten Ausrichtung des Kindersitzes (3), positioniert wird, und/oder
wobei der sekundäre Trägerabschnitt (103) einen Anschlagabschnitt (120) umfasst, der konfiguriert ist, um eine Drehung des Kindersitzes (3) um die Drehachse (R1) herum in eine nach vorne gerichtete Ausrichtung zu begrenzen,
wobei der Anschlagabschnitt (120) vorzugsweise konfiguriert ist, um mit einem Anschlagabschnitt (35) in Kontakt zu kommen, der an dem Kindersitz (3) bereitgestellt ist, und vorzugsweise Anschlagoberflächen (121, 122) umfasst, die konfiguriert sind, um mit Anschlagabschnittsoberflächen (36, 37) in Kontakt zu kommen,
wobei die Anschlagoberflächen (121, 122) vorzugsweise derart ausgebildet, insbesondere geneigt, sind, dass der Anschlagabschnitt (35) in eine zweite Richtung (D2) entgegengesetzt zu der ersten Richtung (D1) gedrückt wird, wenn der Anschlagabschnitt (35) bei dem Drehen des Kindersitzes (3) gegen den Anschlagabschnitt (120) gedrückt wird.

9. Basis (2) nach Anspruch 7,
wobei mindestens ein sekundärer Trägerabschnitt (102) derart konfiguriert ist, dass eine Drehung des Kindersitzes (3) um die Drehachse (R1) herum automatisch verhindert wird, wenn er bei dem Drehen davon um den primären Trägerabschnitt (101) eine nach hinten gerichtete Ausrichtung erreicht, und/oder derart, dass der Kindersitz (3) normalerweise daran gehindert wird, die nach vorne gerichtete Ausrichtung zu erreichen, und nur durch Betätigung eines Betätigungselements (119) durch einen Benutzer in die nach vorne gerichtete Ausrichtung drehbar ist,
wobei vorzugsweise das Betätigungselement (119) ein Löseelement (502) eines Verriegelungsmechanismus (500) zum Verriegeln einer Drehung des Kindersitzes (3) um die Drehachse (R1) herum ist,
wobei der Verriegelungsmechanismus (500) konfiguriert ist, um durch eine Bedienkraft bedienbar zu sein, die durch den Kindersitz (3) darauf ausgeübt wird, wobei die Bedienkraft durch Überführen einer Drehkraft, die auf den Kindersitz (3) ausgeübt wird, in eine Bedienkraft, insbesondere eine Schubkraft, erzeugt werden kann,
wobei der Verriegelungsmechanismus (500) vorzugsweise ein Verriegelungselement (501) umfasst, das zwischen einer Verriegelungsposition, in der es mit dem Rückhalteabschnitt (32, 33) in Eingriff kommen kann, und einer Löseposition, in der eine Drehung des Kindersitzes (3) um die Drehachse (R1) herum nicht verhindert ist, bewegbar ist,
wobei das Verriegelungselement (501) vorzugsweise durch ein Druckelement (503) derart vorgespannt ist, dass eine Bewegung des Verriegelungselements (501) in Richtung der Löseposition gegen eine Druckkraft möglich ist, die durch das Druckelement (503) ausgeübt wird, und
wobei das Verriegelungselement (501) vorzugsweise eine Kraftaufnahmeoberfläche (504) umfasst, die sich derart erstreckt, dass die Bedienkraft durch Gleitkontakt einer Kraftaufbringungsoberfläche (42, 43) auf dem Kindersitz (3) und der Kraftaufnahmeoberfläche (504) erzeugt werden kann, wenn der Kindersitz (3) um die Drehachse (R1) herum gedreht wird.

10. Basis (2) nach einem der Ansprüche 7 bis 9,
der sekundäre Trägerabschnitt (102, 103) umfassend eine Haltestruktur (600) zum Verhindern eines Abhebens des eingesetzten Rückhalteabschnitts (32, 33) von der Basis (2) zum Verhindern einer Drehbewegung des Kindersitzes (3) im Falle eines Unfalls,
die Haltestruktur (600) vorzugsweise umfassend einen Halter (601),
der Halter (601, 602) vorzugsweise umfassend einen Fangabschnitt (603, 604), der vorzugsweise eine Hakenform aufweist und konfiguriert ist, um den Rückhalteabschnitt (32, 33) aufzunehmen, und
wobei der Halter (601, 602) mit einem Kopplungsabschnitt (202) kraftübertragend gekoppelt ist, der konfiguriert ist, um mit einer Befestigungsstruktur (96) in dem Fahrzeugsitz (90) in Eingriff zu stehen,
wobei der Kopplungsabschnitt (202) vorzugsweise an einer Kopplungsanordnung (200), beispielsweise einem Isofix-Arm, bereitgestellt ist und/oder an der Basis (2) verstellbar an dem Kopplungsabschnitt (202) gehalten ist, um ein Spannen der Basis (2) auf dem Fahrzeugsitz zu ermöglichen,
wobei der Halter (601, 602) vorzugsweise mittels eines Kraftüberführungspfads, umfassend starre Kraftüberführungsglieder (605, 606, 607), vorzugsweise mittels metallischer Kraftüberführungsglieder, besonders bevorzugt ausschließlich durch metallische Kraftüberführungsglieder, mit dem Kopplungsabschnitt (202) kraftübertragend gekoppelt ist, und/oder
wobei die Kraftüberführungsglieder vorzugsweise einen Kopplungsabschnittträgerrahmen (606, 607), beispielsweise einen Isofix-Arm-Trägerrahmen, insbesondere ein U-förmiges Gehäuse, auf dem der Kopplungsabschnitt (202) getragen wird, und ein Kopplungselement (605), beispielsweise eine Stange (608), zum Koppeln des Halters (601, 602) mit dem Kopplungsabschnittträgerrahmen (606, 607) umfassen,
wobei der Halter (601, 602) vorzugsweise nur durch ein einziges Kopplungselement (605) mit dem Kopplungsabschnittträgerrahmen (606, 607) gekoppelt ist.

11. Kindersitz (3), der mit einer Basis (2) nach einem der vorstehenden Ansprüche koppelbar ist, der Kindersitz (3) umfassend
einen Schnittstellenabschnitt (30), der mit dem primären Trägerabschnitt (101) lösbar in Eingriff bringbar ist, die Schnittstelle (30) umfassend eine Aussparung (31), die konfiguriert ist, um den primären Trägerabschnitt (101) in die erste Richtung (D) aufzunehmen, und eine Trägeroberfläche (34) aufweist, die konfiguriert ist, um mit einem Längsendabschnitt des primären Trägerabschnitts (101) in Kontakt zu gelangen, und
einen Verriegelungsmechanismus (50) zum lösbaren Verriegeln des Kindersitzes (3) an dem primären Verriegelungsabschnitt (101), der Verriegelungsmechanismus (50) umfassend
einen Eingriffsabschnitt (51, 52), der radial in die Aussparung (31) hinein und aus dieser heraus bewegbar angeordnet ist, um in der Lage zu sein, mit der kontinuierlichen umlaufenden Aussparung (105) des primären Trägerabschnitts (101) in Eingriff zu treten, und
ein Bedienelement (53) zum Zurückziehen des Eingriffsabschnitts (51, 52), wobei vorzugsweise ein Öffnungsendabschnitt der Aussparung (31) durch einen geneigten umlaufenden Wandabschnitt (44) definiert ist, in dem ein Außendurchmesser der Aussparung (31) von einer Öffnung in Richtung der Trägerfläche (34) verringert ist.

12. Kindersitz (3) nach Anspruch 11, wobei
das Bedienelement (53) derart an dem Kindersitz (3) positioniert ist, dass es nur zugänglich ist, wenn der Kindersitz (3) in eine Entriegelungsposition gedreht wird, die sich von einer nach vorne oder nach hinten gerichteten Ausrichtung des Kindersitzes (3) unterscheidet,
wobei das Bedienelement (53) vorzugsweise an einer unteren Oberfläche des Kindersitzes (3) und an einer Position derart bereitgestellt ist, dass es durch die Basis (2) abgedeckt wird, wenn sich der Kindersitz (3) in einer nach vorne oder nach hinten gerichteten Ausrichtung befindet, und nur in der Entriegelungsausrichtung freiliegt,
wobei das Bedienelement (53) an einem Fußende des Kindersitzes (3) bereitgestellt sein kann.

13. Kinderrückhaltesystem (1), umfassend eine Basis (2) nach einem der Ansprüche 1 bis 10 und einen Kindersitz (3) nach einem der Ansprüche 11 und 12, der auf der Basis (2) lösbar montierbar ist.

## Revendications

1. Base (2) pour un système de retenue pour enfant (1), comprenant
une partie de support primaire (101) faisant saillie depuis une partie de surface supérieure (118) de ladite base (2) dans une première direction (D1),
dans laquelle ladite partie de support primaire (101) est conçue pour être mise en prise de manière à pouvoir être libérée avec une partie de mise en prise (51, 52) d'un siège enfant (3) inséré par verrouillage par enclenchement pour le blocage d'un mouvement dudit siège enfant (3) dans ladite première direction (D1), et est conçue pour supporter ledit siège enfant (3) de manière à pouvoir tourner autour d'un axe de rotation (R1) s'étendant parallèlement à ladite première direction (D1),
dans laquelle une surface extérieure latérale (104) de ladite partie de support primaire (101) comprend un renfoncement circonférentiel (105) conçu pour la réception de ladite partie de mise en prise (51) dudit siège enfant (3) pour l'établissement dudit verrouillage par enclenchement, permettant ainsi d'accoupler ledit siège enfant (3) à ladite partie de support primaire (101) dans de multiples orientations angulaires arbitraires autour dudit axe de rotation (R1).

2. Base (2) selon la revendication 1,
dans laquelle ladite partie de support primaire (101) est conçue pour soutenir le poids principal d'un siège enfant (3) monté, et/ou
dans laquelle ladite partie de support primaire (101) est conçue pour supporter ledit siège enfant (3) à une distance prédéterminée de ladite partie de surface supérieure (118), et/ou
dans laquelle ladite partie de support primaire (101) est conçue comme une partie de support fixe.

3. Base (2) selon l'une des revendications précédentes,
dans laquelle ladite partie de support primaire (101) comprend une partie supérieure (107) supportée par une partie formant pilier (106) en surplomb, de sorte qu'une partie en surplomb (108) de ladite partie supérieure (107) est disponible pour l'établissement dudit verrouillage par enclenchement,
dans laquelle, de préférence, ledit renfoncement circonférentiel (105) est limité par une surface inférieure (109) de ladite partie supérieure (107) et une surface extérieure (114) de ladite partie formant pilier (106),
dans laquelle ladite partie formant pilier (106) est de préférence au moins partiellement effilée vers ladite partie supérieure (107).

4. Base (2) selon l'une des revendications précédentes, dans laquelle ladite partie supérieure (107) comprend
une construction en couches avec une couche supérieure (110) et une couche inférieure (111) supportant ladite couche supérieure (110),
dans laquelle ladite couche supérieure (110) est conçue pour entrer en contact par glissement avec une surface de support inférieure (34) dudit siège enfant (3) à supporter.

5. Base (2) selon la revendication 4,
dans laquelle ladite couche inférieure (111) présente une rigidité supérieure à celle de ladite couche supérieure (110), et/ou
dans laquelle ladite couche supérieure (110) comprend un matériau à faible frottement, en particulier un matériau synthétique, par exemple du polyoxyméthylène, conçu pour entrer en contact par glissement avec ledit siège enfant (3), et/ou
dans laquelle ladite couche inférieure (111) comprend un matériau métallique, et/ou
dans laquelle ladite couche supérieure (110) entoure au moins partiellement une région de bord extérieur de ladite couche inférieure (111),
dans laquelle, de préférence, une face inférieure de ladite couche inférieure (111) est exposée ou découverte de sorte que ledit élément de mise en prise (51, 52) d'un siège enfant (3) monté peut entrer directement en contact avec ladite couche inférieure (111).

6. Base (2) selon l'une des revendications 4 et 5,
dans laquelle ladite couche supérieure (110) comprend une surface de glissement (112) s'étendant autour d'un renfoncement (113),
dans laquelle, de préférence, ladite surface de glissement (112) comprend une forme annulaire, et/ou
dans laquelle, de préférence, ladite partie de support primaire (101) est conçue comme un corps creux fermé au sommet et définissant un espace de réception (115) à l'intérieur de celui-ci, dans laquelle ledit espace de réception (115) est conçu pour recevoir une partie d'un mécanisme de tension (400) et/ou un capteur d'un agencement de capteurs.

7. Base (2) selon l'une des revendications précédentes, comprenant en outre
au moins une partie de support secondaire (102, 103) radialement espacée de ladite partie de support primaire (101) et conçue pour recevoir une partie de retenue (32, 33) dudit siège enfant (3) par rotation dudit siège enfant (3) autour dudit axe de rotation (R1) après que ledit siège enfant (3) a été inséré sur ladite partie de support primaire (101),
ladite au moins une partie de support secondaire (102, 103) étant conçue pour limiter un mouvement de basculement dudit siège enfant (3) autour d'un axe de rotation (R2) s'étendant perpendiculairement audit axe de rotation (R1), dans laquelle, de préférence,
au moins une partie de support secondaire (102, 103) comprend un élément de poussée (609), par exemple un ressort à lames (610), ledit élément de poussée (609) étant prévu pour exercer sur ladite partie de retenue (32, 33) une force de poussée dans une seconde direction (D2) opposée à la première direction (D1) lorsque ladite partie de retenue (32, 33) est reçue dans ladite partie de support secondaire (102, 103).

8. Base (2) selon la revendication 7,
dans laquelle une géométrie d'insertion d'au moins une partie de support secondaire (103) est codée mécaniquement pour empêcher ledit siège enfant (3) d'être positionné dans une orientation prédéterminée, en particulier dans une orientation orientée vers l'avant dudit siège enfant (3), et/ou
dans laquelle ladite partie de support secondaire (103) comprend une partie formant butée (120) conçue pour limiter la rotation dudit siège enfant (3) autour dudit axe de rotation (R1) vers une orientation orientée vers l'avant,
ladite partie formant butée (120) étant de préférence conçue pour entrer en contact avec une partie d'arrêt (35) prévue sur ledit siège enfant (3) et comprend de préférence des surfaces de butée (121, 122) conçues pour entrer en contact avec les surfaces de partie d'arrêt (36, 37),
dans laquelle, de préférence, lesdites surfaces de butée (121, 122) sont formées, en particulier sont inclinées, de sorte que ladite partie d'arrêt (35) est poussée dans une seconde direction (D2) opposée à la première direction (D1) lorsque ladite partie d'arrêt (35) est poussée contre ladite partie formant butée (120) lors de la rotation dudit siège enfant (3).

9. Base (2) selon la revendication 7,
dans laquelle au moins une partie de support secondaire (102) est conçue de sorte que la rotation dudit siège enfant (3) autour dudit axe de rotation (R1) est automatiquement bloquée lorsqu'il atteint une orientation orientée vers l'arrière lors de sa rotation autour de ladite partie de support primaire (101), et/ou de sorte que ledit siège enfant (3) est normalement empêché d'atteindre ladite orientation orientée vers l'avant et ne peut pivoter vers ladite orientation orientée vers l'avant que lors de l'actionnement d'un élément d'actionnement (119) par un utilisateur,
dans laquelle, de préférence, ledit élément d'actionnement (119) est un élément de libération (502) d'un mécanisme de verrouillage (500) pour le verrouillage de la rotation dudit siège enfant (3) autour dudit axe de rotation (R1),
dans laquelle ledit mécanisme de verrouillage (500) est conçu pour pouvoir fonctionner au moyen d'une force de fonctionnement exercée sur celui-ci par ledit siège enfant (3), dans laquelle ladite force de fonctionnement peut être générée par le transfert d'une force de rotation exercée sur ledit siège enfant (3) dans ladite force de fonctionnement, en particulier une force de poussée,
dans laquelle ledit mécanisme de verrouillage (500) comprend de préférence un élément de verrouillage (501) qui est mobile entre une position de verrouillage dans laquelle **il** peut venir en prise avec ladite partie de retenue (32, 33) et une position de libération dans laquelle la rotation dudit siège enfant (3) autour dudit axe de rotation (R1) n'est pas bloquée,
dans laquelle ledit élément de verrouillage (501) est de préférence sollicité par un élément de poussée (503) de sorte qu'un mouvement dudit élément de verrouillage (501) vers ladite position de libération est possible à l'encontre d'une force de poussée exercée par ledit élément de poussée (503), et
dans laquelle ledit élément de verrouillage (501) comprend de préférence une surface de réception de force (504) s'étendant de sorte que ladite force de fonctionnement peut être générée par un contact par glissement d'une surface d'application de force (42, 43) sur ledit siège enfant (3) et ladite surface de réception de force (504) lorsque ledit siège enfant (3) tourne autour dudit axe de rotation (R1).

10. Base (2) selon l'une des revendications 7 à 9,
ladite partie de support secondaire (102, 103) comprend une structure de maintien (600) permettant d'empêcher un soulèvement de ladite partie de retenue (32, 33) insérée de ladite base (2) afin d'empêcher un mouvement de rotation dudit siège enfant (3) en cas de collision,
ladite structure de maintien (600) comprenant de préférence un moyen de maintien (601),
ledit moyen de maintien (601, 602) comprenant de préférence une partie de saisie (603, 604), ayant de préférence une forme de crochet et étant conçue pour recevoir ladite partie de retenue (32, 33) et
ledit moyen de maintien (601, 602) étant accouplé par transmission de force à une partie d'accouplement (202) conçue pour être en prise avec une structure de fixation (96) dans le siège de véhicule (90),
dans laquelle ladite partie d'accouplement (202) est de préférence prévue sur un agencement d'accouplement (200), par exemple un bras de type isofix, et/ou maintenue sur ladite base (2) de manière ajustable sur ladite partie d'accouplement (202) pour permettre une mise en tension de ladite base (2) sur ledit siège de véhicule,
dans laquelle ledit support (601, 602) est de préférence accouplé par transmission de force à ladite partie d'accouplement (202) au moyen d'une voie de transfert de force comprenant des moyens de liaison de transfert de force rigides (605, 606, 607), de préférence au moyen de moyens de liaison de transfert de force métalliques, plus préférablement uniquement au moyen de moyens de liaison de transfert de force métalliques, et/ou
dans laquelle, de préférence, lesdits moyens de liaison de transfert de force comprennent un cadre de support de partie d'accouplement (606, 607), par exemple un cadre de support de bras de type isofix, en particulier un boîtier en forme de U, sur lequel ladite partie d'accouplement (202) est supportée, et un élément d'accouplement (605), par exemple une tige (608), pour l'accouplement dudit moyen de maintien (601, 602) audit cadre de support de partie d'accouplement (606, 607),
dans laquelle, de préférence, ledit moyen de maintien (601, 602) n'est accouplé au cadre de support de partie d'accouplement (606, 607) que par un seul élément d'accouplement (605).

11. Siège enfant (3) pouvant être accouplé à une base (2) selon l'une des revendications précédentes, ledit siège enfant (3) comprenant
une partie formant interface (30) pouvant être mise en prise de manière à pouvoir être libérée avec ladite partie de support primaire (101), ladite interface (30) comprenant un renfoncement (31) conçu pour recevoir ladite partie de support primaire (101) dans ladite première direction (D) et ayant une surface de support (34) conçue pour entrer en contact avec une partie d'extrémité longitudinale de ladite partie de support primaire (101), et
un mécanisme de verrouillage (50) pour le verrouillage de manière à pouvoir être libéré dudit siège enfant (3) sur ladite partie de verrouillage primaire (101), ledit mécanisme de verrouillage (50) comprenant
une partie de mise en prise (51, 52) conçue de manière à être mobile radialement dans ledit renfoncement (31) et hors de celui-ci afin de pouvoir venir en prise dans ledit renfoncement circonférentiel (105) continu de ladite partie de support primaire (101), et
un élément de fonctionnement (53) permettant de rétracter ladite partie de mise en prise (51, 52), dans lequel, de préférence, une partie d'extrémité d'ouverture dudit renfoncement (31) est définie par une partie formant paroi circonférentielle inclinée (44) dans laquelle un diamètre extérieur dudit renfoncement (31) est réduit depuis une ouverture vers ladite surface de support (34).

12. Siège enfant (3) selon la revendication 11, dans lequel
ledit élément de fonctionnement (53) est positionné sur ledit siège enfant (3) de sorte qu'il n'est accessible que lorsque ledit siège enfant (3) est tourné dans une orientation de déverrouillage différente d'une orientation orientée vers l'avant ou vers l'arrière dudit siège enfant (3),
dans lequel, de préférence, ledit élément de fonctionnement (53) est prévu sur une surface inférieure dudit siège enfant (3) et à une position telle qu'il est couvert par ladite base (2) lorsque ledit siège enfant (3) est dans une orientation orientée vers l'avant ou vers l'arrière et qu'il n'est exposé que dans ladite orientation de déverrouillage,
dans lequel ledit élément de fonctionnement (53) peut être prévu à une extrémité côté pied dudit siège enfant (3).

13. Système de retenue pour enfant (1) comprenant une base (2) selon l'une des revendications 1 à 10 et un siège enfant (3) selon l'une des revendications 11 et 12 pouvant être monté de manière à pouvoir être libéré sur ladite base (2).
